# EUROPÄISCHE PATENTSCHRIFT

(11) **EP 1 800 497 B1**
(45) Veröffentlichungstag und Bekanntmachung des Hinweises auf die Patenterteilung: **27.05.2009**
(21) Anmeldenummer: 05786595.8
(22) Anmeldetag: 21.09.2005
(51) Int. Cl.: H04Q 1/14, H01R 9/24

(54) **VERTEILEREINRICHTUNG EINER TELEKOMMUNIKATIONSANLAGE SOWIE DRAHTFÜHRUNGSELEMENT FÜR EINE VERTEILEREINRICHTUNG**
DISTRIBUTION UNIT OF A TELECOMMUNICATIONS SYSTEM AND WIRE GUIDE ELEMENT FOR A DISTRIBUTION UNIT
DISPOSITIF DE DISTRIBUTION D'UNE INSTALLATION DE TELECOMMUNICATION ET ELEMENT GUIDE-FIL POUR DISPOSITIF DE DISTRIBUTION

(30) Priorität: 12.10.2004 DE 202004015829 U; 05.01.2005 DE 202005000133 U
(43) Veröffentlichungstag der Anmeldung: 27.06.2007
(73) Patentinhaber: CCS Technology, Inc., Wilmington, DE 19803 (US)
(72) Erfinder: HOFFMANN, Wolfgang, Dr., Dipl.-Ing., 58097 Hagen (DE); VOGT, Rainer, Dipl.-Ing., 45897 Gelsenkirchen (DE); LIPKOWSKI, Marc, Dipl.-Ing., 58640 Iserlohn (DE)
(74) Vertreter: Sturm, Christoph
(86) Internationale Anmeldenummer: PCT/EP2005/010170
(87) Internationale Veröffentlichungsnummer: WO 2006/039984

(56) Entgegenhaltungen:
- EP-A- 1 032 102
- DE-A1- 1 490 466
- US-A- 4 824 403

## Beschreibung

Die Erfindung betrifft eine Verteilereinrichtung einer Telekommunikationsanlage gemäß dem Oberbegriff des Anspruchs 1. Des weiteren betrifft die Erfindung ein Drahtführungselement für eine solche Verteilereinrichtung nach dem Oberbegriff des Anspruchs 12.

Die EP 1 032 102 B1 offenbart eine Verteilereinrichtung für Nachrichtenkabel mit einer Anschlussleiste bzw. einer Funktionsleiste für ankommende bzw. abgehende Kabeladern sowie mit einem Drahtführungselement, wobei das Drahtführungselement zwei Gruppen von Drahtführungskanälen aufweist. Eine erste Gruppen von ersten Drahtführungskanälen verläuft von einer ersten Seite der Verteilereinrichtung zu einer Vorderseite derselben; eine zweite Gruppe von zweiten Drahtführungskanälen verläuft von einer zweiten, der ersten Seite gegenüberliegenden Seite der Verteilereinrichtung zu der Vorderseite derselben. Gemäß EP 1 032 102 B1 verfügen die ersten Drahtführungskanäle der ersten Gruppe über einen größeren Durchtrittsquerschnitt als die zweiten Drahtführungskanäle der zweiten Gruppe, wobei die ersten Drahtführungskanäle der ersten Gruppe auf einer Oberseite der Anschlussleiste bzw. Funktionsleiste und die zweiten Drahtführungskanäle der zweiten Gruppe auf einer Unterseite der Anschlussleiste bzw. Funktionsleiste verlaufen. Gemäß der EP 1 032 102 B1 verlaufen demnach die ersten Drahtführungskanäle der ersten Gruppe sowie die zweiten Drahtführungskanäle der zweiten Gruppen in zwei unterschiedlichen, vertikal voneinander beabstandeten Ebenen, wobei sich sowohl die ersten Drahtführungskanäle der ersten Gruppe als auch die zweiten Drahtführungskanäle der zweiten Gruppe über die gesamte horizontale Abmessung der Vorderseite der Verteilereinrichtung erstrecken. Werden zwei derartige, als Verteilerleisten ausgebildete Verteilereinrichtungen zur Bildung eines Verteilerblocks übereinander positioniert, so sind zwischen zwei Anschlussleisten bzw. Funktionsleisten zwei Ebenen von Drahtführungskanälen positioniert, nämlich eine erste Ebene mit der ersten Gruppe von ersten Drahtführungskanälen sowie eine zweite Ebene mit der zweiten Gruppe von zweiten Drahtführungskanälen. Hierdurch ergibt sich zwangsläufig eine große Bauhöhe für einen Verteilerblock.

Eine weitere Verteilereinrichtung ist aus der DE 202 00 746 U1 bekannt. Die dort gezeigte Verteilereinrichtung verfügt wiederum über eine Anschlussleiste bzw. Funktionsleiste zum Anschluss von ankommenden bzw. abgehenden Kabeladern sowie über ein Drahtführungselement, wobei das Drahtführungselement der dort gezeigten Verteilereinrichtung Drahtführungskanäle umfasst, die in drei Ebenen positioniert sind. So sind gemäß der DE 202 00 746 U1 auf einer Seite der Anschlussleiste bzw. Funktionsleiste zwei Gruppen von Drahtführungskanälen in zwei Ebenen positioniert, auf der gegenüberliegenden Seite der Anschlussleiste bzw. Funktionsleiste ist eine Gruppe von Drahtführungskanälen in einer Ebene angeordnet. Werden zwei derartige, als Verteilerleisten ausgebildete Verteilereinrichtungen zur Bereitstellung eines Verteilerblocks übereinander angeordnet, so sind zwischen zwei benachbarten bzw. gegenüberliegenden Funktionsleisten bzw. Anschlussleisten drei Ebenen von Drahtführungskanälen positioniert. Auch hierdurch ergibt sich zwangsläufig eine große Bauhöhe für einen Verteilerblock.

Hinsichtlich weiteren Standes der Technik wird auf die DE 14 90 466 A1 und die US-A-48244 403 verwiesen.

Hiervon ausgehend liegt der vorliegenden Erfindung das Problem zu Grunde, eine neuartige Verteilereinrichtung einer Telekommunikationsanlage und ein neuartiges Drahtführungselement für eine solche Verteilereinrichtung zu schaffen.

Dieses Problem wird durch eine Verteilereinrichtung mit den Merkmalen des Anspruchs 1 gelöst. Erfindungsgemäß verläuft die zweite Gruppe von zweiten Drahtführungskanälen in derselben Ebene wie die erste Gruppe von ersten Drahtführungskanälen, wobei die erste Gruppe von ersten Drahtführungskanälen mehrere nebeneinander positionierte Drahtführungskanäle aufweist, und wobei die zweite Gruppe von zweiten Drahtführungskanälen mehrere nebeneinander sowie übereinander positionierte Drahtführungskanäle aufweist.

Die erste Gruppe von ersten Drahtführungskanälen erstreckt sich von der ersten Seite zu der Vorderseite der Verteilereinrichtung. Die zweite Gruppe von zweiten Drahtführungskanälen erstreckt sich von der zweiten Seite zur Vorderseite der Verteilereinrichtung, und zwar derart, dass die zweiten Drahtführungskanäle, die einen kleineren Querschnitt aufweisen als die ersten Drahtführungskanäle, in derselben Ebene verlaufen wie die ersten Drahtführungskanäle. Hierdurch ist es möglich, alle zur Verkabelung benötigten Drahtführungskanäle platzsparend in die Verteilereinrichtung zu integrieren, und zwar derart, dass zwischen zwei Anschlussleisten die Anzahl der Ebenen, die für die Drahtführungskanäle benötigt wird, gegenüber dem Stand der Technik reduziert wird. Hierdurch können deutlich kompaktere Bauformen für Verteilerblöcke realisiert werden.

Vorzugsweise weist die erste Gruppe von ersten Drahtführungskanälen mehrere nebeneinander positionierte Drahtführungskanäle und die zweite Gruppe von zweiten Drahtführungskanälen mehrere nebeneinander sowie übereinander positionierte Drahtführungskanäle auf, wobei die zweiten Drahtführungskanäle in horizontaler Richtung gesehnen seitlich neben den ersten Drahtführungskanälen verlaufen, und wobei die vertikale Erstreckung der zweiten Gruppe von zweiten Drahtführungskanälen der vertikalen Erstreckung die ersten Gruppe von ersten Drahtführungskanälen entspricht.

Nach einer vorteilhaften Weiterbildung der Erfindung sind unmittelbar übereinander positionierte Reihen von Drahtführungskanälen der zweiten Gruppe von zweiten Drahtführungskanälen durch eine Trennwand voneinander getrennt, wobei die Trennwand Durchbrüche aufweist, um Kabeladern zwischen übereinander positionierten Reihen von Drahtführungskanälen zu überführen.

Nach einer weiteren vorteilhaften Weiterbildung der Erfindung weisen die ersten Drahtführungskanäle der ersten Gruppe und die zweiten Drahtführungskanäle der zweiten Gruppe einen bogenförmigen Verlauf auf, wobei innerhalb jeder Gruppe nebeneinander positionierte Drahtführungskanäle durch bogenförmig verlaufende Kanalwände voneinander getrennt sind, und wobei im Bereich der zweiten Gruppe von zweiten Drahtführungskanälen mindestens eine bogenförmig verlaufende Kanalwand einen Durchbruch aufweist, um ausgehend von der zweiten Seite Kabeladern über zwei unterschiedliche, im Bereich der zweiten Seite positionierte Kanalöffnungen derart an die Vorderseite zu führen, dass unabhängig von der im Bereich der zweiten Seite gewählten Kanalöffnungen die Kabeladern im Bereich der Vorderseite ein und derselben Kanalöffnung zuführbar sind.

Insbesondere ist das oder jedes Drahtführungselement derart asymmetrisch geteilt, dass die erste Gruppe von ersten Drahtführungskanälen sich über einen größeren Abschnitt der Vorderseite der Verteilereinrichtung erstreckt als die zweite Gruppe von zweiten Drahtführungskanälen.

Das erfindungsgemäße Drahtführungselement ist im unabhängigen Anspruch 12 definiert.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: ein erfindungsgemäßes Drahtführungselement einer erfindungsgemäßen Verteilereinrichtung nach einem ersten Ausführungsbeispiel der Erfindung in einer perspektivischen Seitenansicht von einer ersten Seite;
- Fig. 2: das erfindungsgemäße Drahtführungselement der Fig. 1 in einer perspektivischen Seitenansicht von einer der ersten Seite gegenüberliegenden zweiten Seite;
- Fig. 3: das erfindungsgemäße Drahtführungselement der Fig. 1 und 2 in Vorderansicht;
- Fig. 4: eine Halbschale des erfindungsgemäßen Drahtführungselements der Fig. 1 bis 3 in perspektivischen Seitenansicht; und
- Fig. 5:: ein erfindungsgemäßes Drahtführungselement einer erfindungsgemäßen Verteilereinrichtung nach einem zweiten Ausführungsbeispiel der Erfindung in Vorderansicht.

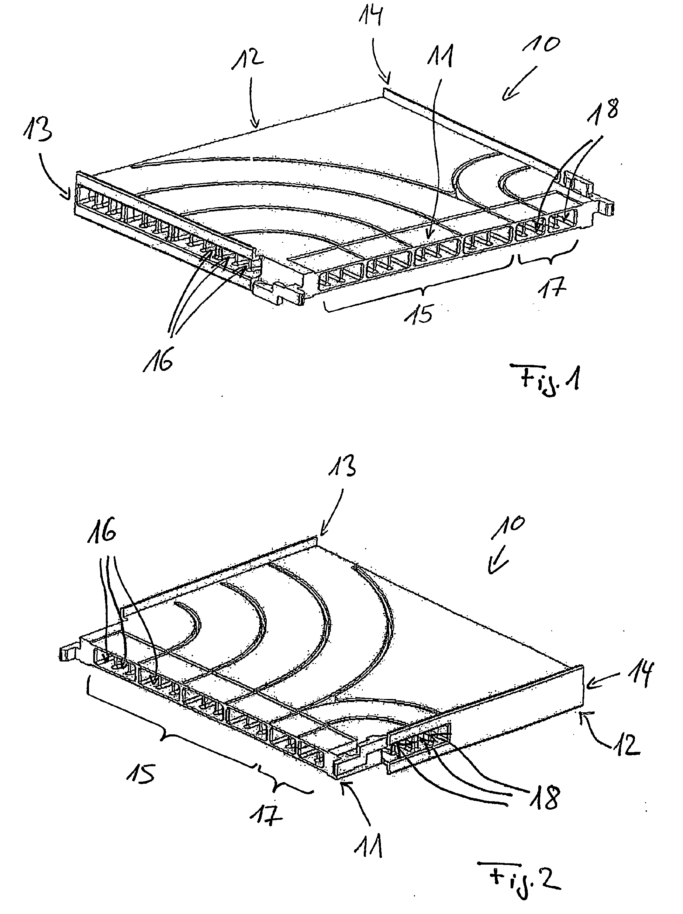

Nachfolgend wird die hier vorliegende Erfindung unter Bezugsnahme auf Fig. 1 bis 5 in größerem Detail beschrieben.

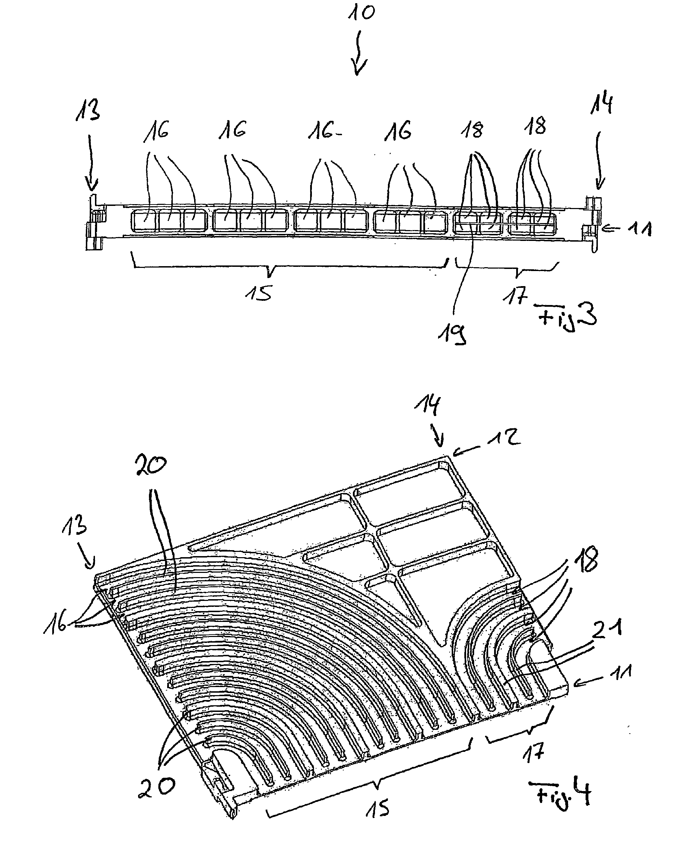

Fig. 1 bis 4 zeigen eine bevorzugte Ausführungsform eines erfindungsgemäßen Drahtführungselements 10 nach einem ersten Ausführungsbeispiel der Erfindung für eine im Detail nicht-dargestellte Verteilereinrichtung. Das Drahtführungselement 10 der Fig. 1 bis 4 verfügt über eine Vorderseite 11, eine Rückseite 12 sowie zwei sich zwischen der Vorderseite 11 sowie der Rückseite 12 erstreckende Seiten, nämlich eine erste Seite 13 sowie eine zweite Seite 14. Das erfindungsgemäße Drahtführungselement 10 verfügt über mehrere Drahtführungskanäle, nämlich eine erste Gruppe 15 von ersten Drahtführungskanälen 16 sowie eine zweite Gruppe 17 von zweiten Drahtführungskanälen 18. Die ersten Drahtführungskanäle 16 der ersten Gruppe 15 verlaufen ausgehend von der ersten Seite 13 zur Vorderseite 11 des Drahtführungselements 10. Die ersten Drahtführungskanäle 16 sind im Bereich der Vorderseite 11 sowie der ersten Seite 13 offen, so dass Kabeladern einführbar bzw. durchführbar sind. Die zweiten Drahtführungskanäle 18 der zweiten Gruppe 17 hingegen verlaufen ausgehend von der zweiten Seite 14 des Drahtführungselements 10 zu der Vorderseite 11 desselben. Die zweiten Drahtführungskanäle 18 sind im Bereich der Vorderseite 11 sowie der zweiten Seite 14 offen. Wie insbesondere Fig. 3 entnommen werden kann, verfügen die ersten Drahtführungskanäle 16 der ersten Gruppe 15 über einen größeren Querschnitt bzw. Durchtrittsquerschnitt als die zweiten Drahtführungskanäle 18 der zweiten Gruppe 17.

Ein derartiges Drahtführungselement 10 wird von zwei Halbschalen, nämlich einer Oberschale und einer Unterschale, gebildet. Fig. 4 zeigt eine perspektivische Ansicht einer Halbschale des Drahtführungselements 10.

Im Sinne der hier vorliegenden Erfindung verläuft die zweite Gruppe 17 von zweiten Drahtführungskanälen 18 in derselben Ebene wie die erste Gruppe 15 von ersten Drahtführungskanälen 16.

Wie insbesondere Fig. 3 entnommen werden kann, sind in der ersten Gruppe 15 von ersten Drahtführungskanälen mehrere erste Drahtführungskanäle 16 nebeneinander positioniert. Im Ausführungsbeispiel der Fig. 1 bis 4 umfasst die erste Gruppe 15 insgesamt zwölf nebeneinander angeordnete, erste Drahtführungskanäle 16. Die zweite Gruppe 17 von zweiten Drahtführungskanälen 18 verfügt über mehrere nebeneinander sowie übereinander positionierte, zweite Drahtführungskanäle 18. Im Ausführungsbeispiel der Fig. 1 bis 4 verfügt die zweite Gruppe 17 über insgesamt acht zweite Drahtführungskanäle 18, wobei jeweils vier zweite Drahtführungskanäle 18 nebeneinander und jeweils zwei zweite Drahtführungskanäle 18 übereinander positioniert sind. Im bevorzugten Ausführungsbeispiel der Fig. 1 bis 4 verlaufen demnach die nebeneinander positionierten, ersten Drahtführungskanäle 16 der ersten Gruppe 15 in einer horizontal verlaufenden Reihe. Die zweiten Drahtführungskanäle 18 der zweiten Gruppe 17 bilden zwei horizontal verlaufende sowie übereinander positionierte Reihen, wobei die vertikale Erstreckung der beiden Reihen der zweiten Gruppe 17 von zweiten Drahtführungskanälen 18 dieselbe vertikale Erstreckung aufweist wie die Reihe der ersten Gruppe 15 aus ersten Drahtführungskanälen 16. Die zweite Gruppe 17 von zweiten Drahtführungskanäien 18 verläuft demnach in derselben Ebene wie die erste Gruppe 15 von ersten Drahtführungskanälen 16. Dies kann am besten Fig. 3 entnommen werden.

In horizontaler Richtung gesehen, verlaufen demnach die zweiten Drahtführungskanäle 18 der zweiten Gruppe 17, die über einen kleineren Querschnitt verfügen als die ersten Drahtführungskanäle 16 der ersten Gruppe 15, seitlich neben den ersten Drahtführungskanälen 16 der ersten Gruppe 15, wobei die vertikale Erstreckung der zweiten Gruppe 17 von zweiten Drahtführungskanälen 18 der vertikalen Erstreckung der ersten Gruppe 15 von ersten Drahtführungskanälen 16 entspricht.

Durch diese erfindungsgemäße Anordnung von Drahtführungskanälen 16 und 18, die einerseits unterschiedliche Querschnitte aufweisen und andererseits von unterschiedlichen, gegenüberliegenden Seiten 13 bzw. 14 zur Vorderseite 11 des Drahtführungselements 10 verlaufen, lassen sich die Drahtführungskanäle 16, 18 kompakt und platzsparend in das Drahtführungselement 10 integrieren. Hierdurch ist eine minimierte, vertikale Bauhöhe für das Drahtführungselement 10 realisierbar.

Im Ausführungsbeispiel der Fig. 1 bis 4 ist das erfindungsgemäße Drahtführungselement 10 asymmetrisch geteilt, wobei die Teilungsrichtung parallel zu den Seiten 13 und 14 verläuft. Das Drahtführungselement 10 ist derart asymmetrisch geteilt, dass die erste Gruppe 15 von ersten Drahtführungskanälen 16 sich über einen größeren Abschnitt der Vorderseite 11 des Drahtführungselements 10 erstreckt als die zweite Gruppe 17 von zweiten Drahtführungskanälen 18.

Wie Fig. 3 entnommen werden kann, sind die unmittelbar übereinander positionierten Drahtführungskanäle 18 der zweiten Gruppe 17 durch eine Trennwand 19 voneinander getrennt, wobei die Trennwand 19 in horizontaler Richtung verläuft und zwischen den beiden Halbschalen, die das Drahtführungselement 10 bilden, angeordnet ist.

Es liegt dabei im Sinne der hier vorliegenden Erfindung, dass die Trennwand 19, welche die beiden übereinander positionierten Reihen von zweiten Drahtführungskanälen 18 voneinander trennt, Durchbrüche aufweisen kann. Durch diese Durchbrüche in der Trennwand 19 können dann Kabeladern zwischen den übereinander positionierten Reihen von zweiten Drahtführungskanälen 18 überführt werden. So liegt es zum Beispiel im Sinne der hier vorliegenden Erfindung, dass dann, wenn die Trennwand 19 derartige Durchbrüche aufweist, eine Kabelader im Bereich der zweiten Seite 14 in einen in der unteren Ebene verlaufenden, zweiten Drahtführungskanal 18 eingeführt werden kann, um im Bereich der Vorderseite 11 im Bereich eines in der oberen Ebene verlaufenden, zweiten Drahtführungskanals 18 das Drahtführungselement 10 zu verlassen. Verfügt die Trennwand 19 demnach über Durchbrüche, so können Kabeladern von einem Drahtführungskanal 18 der oberen bzw. unteren Ebene in den Drahtführungskanal 18 der darunter liegenden bzw. darüber liegenden Ebene überführt werden.

Fig. 4 zeigt eine Halbschale des erfindungsgemäßen Drahtführungselements 10, wobei Fig. 4 entnommen werden kann, dass sowohl die ersten Drahtführungskanäle 16 der ersten Gruppe 15 als auch die zweiten Drahtführungskanäle 18 der zweiten Gruppe 17 einen bogenförmigen Verlauf aufweisen. Die ersten Drahtführungskanäle 16 sowie die zweiten Drahtführungskanäle 18 werden dabei innerhalb jeder Gruppe durch bogenförmig verlaufende Kanalwände 20 bzw. 21 voneinander getrennt. Im Ausführungsbeispiel der Fig. 4 sind die Kanalwände 20, 21 dabei über ihren gesamten Verlauf geschlossen.

Es liegt im Sinne der hier vorliegenden Erfindung, dass die Kanalwände 20 bzw. 21 Durchbrüche aufweisen können, um Kabeladern zwischen nebeneinander positionierten Drahtführungskanälen 16 bzw. 18 einer Gruppe 15 bzw. 17 von Drahtführungskanälen zu überführen. Besonders bevorzugt ist hierbei eine Ausführung, in welcher die Kanalwände der zweiten Gruppe von zweiten Drahtführungskanälen Durchbrüche aufweisen. Dies kann erfolgen, um ausgehend von der zweiten Seite 14 Kabeladern über zwei unterschiedliche, im Bereich der zweiten Seite positionierte Kanalöffnungen der zweiten Drahtführungskanäle derart an die Vorderseite 11 des Drahtführungselementes 10 zu führen, das unabhängig von der im Bereich der zweiten Seite 14 gewählten Kanalöffnung die Kabeladern im Bereich der Vorderseite ein und derselben Kanalöffnung zuführbar sind. So ist es zum Beispiel vorstellbar, dass jede der in Fig. 3 gezeigten Kanalöffnungen der insgesamt acht zweiten Drahtführungskanäle 18 im Bereich der zweiten Seite 14 zwei Kanalöffnungen zugeordnet sind. Ausgehend von der zweiten Seite 14 könnte demnach dann jede Kanalöffnung im Bereich der Vorderseite 11 über zwei unterschiedliche Kanalöffnungen im Bereich der ersten Seite 14 bedient werden.

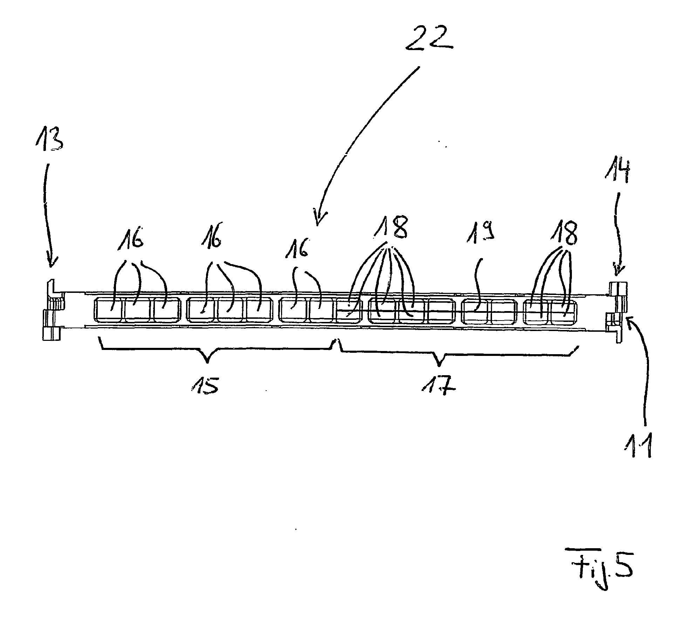

Eine zweite Ausführungsform eines erfindungsgemäßen Drahtführungselements 22 zeigt Fig. 5. Zur Vermeidung unnötiger Wiederholungen werden für das Drahtführungselement 22 der Fig. 5 gleiche Bezugsziffern verwendet wie für das Drahtführungselement 10 der Fig. 1 bis 4. Auch das Drahtführungselement 22 der Fig. 5 verfügt über eine Vorderseite 11, eine Rückseite 12 sowie zwei sich zwischen der Vorderseite 11 sowie der Rückseite 11 erstreckende Seiten, nämlich eine erste Seite 13 sowie eine zweite Seite 14. Das Drahtführungselement 22 verfügt wiederum über mehrere Drahtführungskanäle, nämlich eine erste Gruppe 15 von ersten Drahtführungskanälen 16 sowie eine zweite Gruppe 17 von zweiten Drahtführungskanälen 18. Die ersten Drahtführungskanäle 16 der ersten Gruppe 15 verlaufen ausgehend von der ersten Seite 13 zur Vorderseite 11 des Drahtführungselements 22. Die zweiten Drahtführungskanäle 18 der zweiten Gruppe 17 hingegen verlaufen ausgehend von der zweiten Seite 14 des Drahtführungselements 22 zu der Vorderseite 11 desselben. Die ersten Drahtführungskanäle 16 der ersten Gruppe 15 verfügen wiederum über einen größeren Querschnitt bzw. Durchtrittsquerschnitt als die zweiten Drahtführungskanäle 18 der zweiten Gruppe 17. Erfindungsgemäß verläuft die zweite Gruppe 17 von zweiten Drahtführungskanälen 18 in derselben Ebene wie die erste Gruppe 15 von ersten Drahtführungskanälen 16. Diesbezüglich kann auf die Ausführungen zum Drahtführungselement 10 der Fig. 1 bis 4 verwiesen werden.

Das Drahtführungselement 22 der Fig. 5 unterscheidet sich vom Drahtführungselement 10 der Fig. 1 bis 4 dadurch, dass dasselbe symmetrisch geteilt, wobei die Teilungsrichtung parallel zu den Seiten 13 und 14 verläuft. Das Drahtführungselement 22 ist derart symmetrisch geteilt, dass die erste Gruppe 15 von ersten Drahtführungskanälen 16 sich über einen gleichgroßen Abschnitt der Vorderseite 11 des Drahtführungselements 22 erstreckt wie die zweite Gruppe 17 von zweiten Drahtführungskanälen 18.

Mit dem erfindungsgemäßen Drahtführungselement lassen sich Verteilereinrichtung besonders platzsparend aufbauen. So liegt es im Sinne der hier vorliegenden Erfindung, zwischen zwei nicht-dargestellten Funktionsleisten, die im Bereich ihrer Vorderseiten Kontakte bzw. Schneidklemmen für den Anschluss ankommender bzw. abgehender Kabeladern aufweisen, ein derartiges Drahtführungselement zu positionieren. Hierbei ergibt sich dann eine besondere kompakte Bauform für Verteilerblöcke, innerhalb derer sandwichartig übereinander abwechslungsweise jeweils eine Funktionsleiste sowie ein Drahtführungselement positioniert sind.

### Bezugszeichenliste

- 10: Drahtführungselement
- 11: Vorderseite
- 12: Rückseite
- 13: Seite
- 14: Seite
- 15: erste Gruppe
- 16: erste Drahtführungskanäle
- 17: zweite Gruppe
- 18: zweite Drahtführungskanäle
- 19: Trennwand
- 20: Kanalwand
- 21: Kanalwand
- 22: Drahtführungselement

## Patentansprüche

1. Verteilereinrichtung, insbesondere Verteilerleiste oder Verteilerblock, einer Telekommunikationsanlage, mit mindestens einer Funktionsleiste und mit mindestens einem Drahtführungselement, wobei die oder jede Funktionsleiste an einer Vorderseite der Verteilereinrichtung Kontakte für den Anschluss ankommender bzw. abgehender Kabeladern aufweist, und wobei das oder jedes Drahtführungselement Drahtführungskanäle für die Kabeladern aufweist, nämlich eine erste Gruppe von ersten Drahtführungskanälen, die von einer ersten Seite zu der Vorderseite der Verteilereinrichtung verlaufen, und eine zweite Gruppe von zweiten Drahtführungskanälen, die von einer zweiten, der ersten Seite gegenüberliegenden Seite zu der Vorderseite der Verteilereinrichtung verlaufen, wobei die ersten Drahtführungskanäle einen größeren Querschnitt aufweisen als die zweiten Drahtführungskanäle, **dadurch gekennzeichnet, dass** die zweite Gruppe (17) von zweiten Drahtführungskanälen (18) in derselben Ebene verläuft wie die erste Gruppe (15) von ersten Drahtführungskanälen (16), wobei die erste Gruppe (15) von ersten Drahtführungskanälen mehrere nebeneinander positionierte Drahtführungskanäle (16) aufweist, und wobei die zweite Gruppe (17) von zweiten Drahtführungskanälen mehrere nebeneinander sowie übereinander positionierte Drahtführungskanäle (18) aufweist

2. Verteilereinrichtung nach Anspruch 1, **dadurch gekennzeichnet, dass** die zweiten Drahtführungskanäle (18) der zweiten Gruppe (17) in horizontaler Richtung gesehnen seitlich neben den ersten Drahtführungskanälen (16) der ersten Gruppe (15) verlaufen, wobei die vertikale Erstreckung der zweiten Gruppe (17) von zweiten Drahtführungskanälen der vertikalen Erstreckung die ersten Gruppe (15) von ersten Drahtführungskanälen entspricht.

3. Verteilereinrichtung nach Anspruch 1 oder 2, **dadurch gekennzeichnet, dass** die erste Gruppe (15) von ersten Drahtführungskanälen eine einzige horizontal verlaufende Reihe von mehreren nebeneinander positionierten Drahtführungskanälen (16) aufweist, und dass die zweite Gruppe (17) von zweiten Drahtführungskanälen zwei horizontal verlaufende und vertikal übereinander angeordnete Reihen von mehreren nebeneinander positionierten Drahtführungskanälen (18) aufweist, wobei die beiden Reihen der zweiten Gruppe (17) von zweiten Drahtführungskanälen (18) in horizontaler Richtung derart seitlich neben der Reihe der ersten Gruppe (15) von ersten Drahtführungskanälen (16) verlaufen, dass die vertikale Erstreckung der beiden Reihen der zweiten Gruppe (17) von zweiten Drahtführungskanälen der vertikalen Erstreckung der Reihe der erste Gruppe (15) von ersten Drahtführungskanälen entspricht.

4. Verteilereinrichtung nach einem oder mehreren der Ansprüche 1 bis 3, **dadurch gekennzeichnet, dass** unmittelbar übereinander positionierte Reihen von Drahtführungskanälen (18) der zweiten Gruppe (17) von zweiten Drahtführungskanälen durch eine Trennwand (19) voneinander getrennt sind.

5. Verteilereinrichtung nach Anspruch 4, **dadurch gekennzeichnet, dass** die Trennwand (19) Durchbrüche aufweist, um Kabeladern zwischen den übereinander positionierten Reihen von Drahtführungskanälen (18) zu überführen.

6. Verteilereinrichtung nach einem oder mehreren der Ansprüche 1 bis 5, **dadurch gekennzeichnet, dass** die ersten Drahtführungskanäle (16) der ersten Gruppe (15) und die zweiten Drahtführungskanäle (18) der zweiten Gruppe (17) einen bogenförmigen Verlauf aufweisen, wobei innerhalb jeder Gruppe (15, 17) nebeneinander positionierte Drahtführungskanäle (16, 18) durch bogenförmig verlaufende Kanalwände (20, 21) voneinander getrennt sind.

7. Verteilereinrichtung nach Aspruch 6, **dadurch gekennzeichnet, dass** mindestens eine bogenförmig verlaufende Kanalwand einen Durchbruch aufweist, um Kabeladern zwischen nebeneinander positionierten Drahtführungskanälen einer Gruppe zu überführen.

8. Verteilereinrichtung nach Anspruch 6 oder 7, **dadurch gekennzeichnet, dass** im Bereich der zweiten Gruppe von zweiten Drahtführungskanälen mindestens eine bogenförmig verlaufende Kanalwand einen Durchbruch aufweist, um ausgehend von der zweiten Seite Kabeladern über zwei unterschiedliche, im Bereich der zweiten Seite positionierte Kanalöffnungen derart an die Vorderseite zu führen, dass unabhängig von der im Bereich der zweiten Seite gewählten Kanalöffnungen die Kabeladern im Bereich der Vorderseite ein und derselben Kanalöffnung zuführbar sind.

9. Verteilereinrichtung nach einem oder mehreren der Ansprüche 1 bis 8, **dadurch gekennzeichnet, dass** das oder jedes Drahtführungselement (10) derart asymmetrisch geteilt ist, dass die erste Gruppe (15) von ersten Drahtführungskanälen (16) sich über einen größeren Abschnitt der Vorderseite (11) der Verteilereinrichtung erstreckt als die zweite Gruppe (17) von zweiten Drahtführungskanälen (18).

10. Verteilereinrichtung nach einem oder mehreren der Ansprüche 1 bis 8, **dadurch gekennzeichnet, dass** das oder jedes Drahtführungselement (22) derart symmetrisch geteilt ist, dass die erste Gruppe (15) von ersten Drahtführungskanälen (16) sich über einen gleichgroßen Abschnitt der Vorderseite (11) der Verteilereinrichtung erstreckt wie die zweite Gruppe (17) von zweiten Drahtführungskanälen (18).

11. Verteilereinrichtung nach einem oder mehreren der Ansprüche 1 bis 10, **dadurch gekennzeichnet, dass** dieselbe als Verteilerblock mit mehreren, sandwichartig übereinander angeordneten Funktionsleisten ausgebildet ist, wobei zwischen zwei benachbarten Funktionsleisten mindestens ein Drahtführungselement positioniert ist.

12. Drahtführungselement für eine Verteilereinrichtung einer Telekommunikationsanlage, mit Drahtführungskanälen für Kabeladern, nämlich mit einer ersten Gruppe von ersten Drahtführungskanälen, die von einer ersten Seite zu einer Vorderseite verlaufen, und mit einer zweiten Gruppe von zweiten Drahtführungskanälen, die von einer zweiten, der ersten Seite gegenüberliegenden Seite zu der Vorderseite verlaufen, wobei die ersten Drahtführungskanäle einen größeren Querschnitt aufweisen als die zweiten Drahtführungskanäle, **dadurch gekennzeichnet, dass** die zweite Gruppe (17) von zweiten Drahtführungskanälen (18) in derselben Ebene verläuft wie die erste Gruppe (15) von ersten Drahtführungskanälen (16), wobei die erste Gruppe (15) von ersten Drahtführungskanälen mehrere nebeneinander positionierte Drahtführungskanäle (16) aufweist, und wobei die zweite Gruppe (17) von zweiten Drahtführungskanälen mehrere nebeneinander sowie übereinander positionierte Drahtführungskanäle (18) aufweist.

13. Drahtführungselement nach Anspruch 12, **dadurch gekennzeichnet, dass** die zweiten Drahtführungskanäle (18) der zweiten Gruppe (17) in horizontaler Richtung gesehnen seitlich neben den ersten Drahtführungskanälen (16) der ersten Gruppe (15) verlaufen, wobei die vertikale Erstreckung der zweiten Gruppe (17) von zweiten Drahtführungskanälen der vertikalen Erstreckung die ersten Gruppe (15) von ersten Drahtführungskanälen entspricht.

14. Drahtführungselement nach Anspruch 12 oder 13, **dadurch gekennzeichnet, dass** die erste Gruppe (15) von ersten Drahtführungskanälen eine einzige horizontal verlaufende Reihe von mehreren nebeneinander positionierten Drahtführungskanälen (16) aufweist, und dass die zweite Gruppe (17) von zweiten Drahtführungskanälen zwei horizontal verlaufende und vertikal übereinander angeordnete Reihen von mehreren nebeneinander positionierten Drahtführungskanälen (18) aufweist, wobei die beiden Reihen der zweiten Gruppe (17) von zweiten Drahtführungskanälen (18) in horizontaler Richtung derart seitlich neben der Reihe der ersten Gruppe (15) von ersten Drahtführungskanälen (16) verlaufen, dass die vertikale Erstreckung der beiden Reihen der zweiten Gruppe (17) von zweiten Drahtführungskanälen (18) der vertikalen Erstreckung der Reihe der erste Gruppe (15) von ersten Drahtführungskanälen (16) entspricht.

15. Drahtführungselement nach einem oder mehreren der Ansprüche 12 bis 14, **dadurch gekennzeichnet, dass** unmittelbar übereinander positionierte Reihen von Drahtführungskanälen (18) der zweiten Gruppe (17) von zweiten Drahtführungskanälen durch eine Trennwand (19) voneinander getrennt sind.

16. Drahtführungselement nach Anspruch 15, **dadurch gekennzeichnet, dass** die Trennwand (19) Durchbrüche aufweist, um Kabeladern zwischen den übereinander positionierten Reihen von Drahtführungskanälen (18) zu überführen.

17. Drahtführungselement nach einem oder mehreren der Ansprüche 12 bis 16, **dadurch gekennzeichnet, dass** die ersten Drahtführungskanäle (16) der ersten Gruppe (15) und die zweiten Drahtführungskanäle (18) der zweiten Gruppe (17) einen bogenförmigen Verlauf aufweisen, wobei innerhalb jeder Gruppe (15, 17) nebeneinander positionierte Drahtführungskanäle (16, 18) durch bogenförmig verlaufende Kanalwände (20, 21) voneinander getrennt sind.

18. Drahtführungselement nach Anspruch 17, **dadurch gekennzeichnet, dass** im Bereich der zweiten Gruppe von zweiten Drahtführungskanälen mindestens eine bogenförmig verlaufende Kanalwand einen Durchbruch aufweist, um ausgehend von der zweiten Seite Kabeladern über zwei unterschiedliche, im Bereich der zweiten Seite positionierte Kanalöffnungen derart an die Vorderseite zu führen, dass unabhängig von der im Bereich der zweiten Seite gewählten Kanalöffnungen die Kabeladern im Bereich der Vorderseite ein und derselben Kanalöffnung zuführbar sind.

19. Drahtführungselement nach einem oder mehreren der Ansprüche 12 bis 18, **dadurch gekennzeichnet, dass** dasselbe derart asymmetrisch geteilt ist, dass die erste Gruppe (15) von ersten Drahtführungskanälen (16) sich über einen größeren Abschnitt der Vorderseite (11) erstreckt als die zweite Gruppe (17) von zweiten Drahtführungskanälen (18).

20. Drahtführungselement nach einem oder mehreren der Ansprüche 12 bis 18, **dadurch gekennzeichnet, dass** dasselbe derart symmetrisch geteilt ist, dass die erste Gruppe (15) von ersten Drahtführungskanälen (16) sich über einen gleichgroßen Abschnitt der Vorderseite (11) der Verteilereinrichtung erstreckt wie die zweite Gruppe (17) von zweiten Drahtführungskanälen (18).

## Claims

1. Distribution unit, particularly a distribution strip or distribution block, of a telecommunication system, comprising at least one functional strip and at least one wire guide element, wherein the or each functional strip has contacts for connecting incoming or outgoing cable cores on one front face of the distribution unit, and wherein the or each wire guide element has wire guide channels for the cable cores, namely a first group of first wire guide channels which extend from a first side to the front face of the distribution unit, and a second group of second wire guide channels which extend from a second side, opposite the first side, to the front face of the distribution unit, the first wire guide channels having a greater cross section than the second wire guide channels, **characterized in that** the second group (17) of second wire guide channels (18) extends in the same plane as the first group (15) of first wire guide channels (16), the first group (15) of first wire guide channels having a number of wire guide channels (16) positioned next to one another, and the second group (17) of second wire guide channels having a number of wire guide channels (18) positioned next to one another and above one another.

2. Distribution unit according to Claim 1, **characterized in that** the second wire guide channels (18) of the second group (17) extend laterally next to the first wire guide channels (16) of the first group (15), seen in the horizontal direction, the vertical extent of the second group (17) of second wire guide channels corresponding to the vertical extent of the first group (15) of first wire guide channels.

3. Distribution unit according to Claim 1 or 2, **characterized in that** the first group (15) of first wire guide channels has a single row of a number of adjacently positioned wire guide channels (16) extending horizontally, and that the second group (17) of second wire guide channels has two rows, extending horizontally and arranged vertically above one another, of a number of wire guide channels (18) positioned next to one another, the two rows of the second group (17) of second wire guide channels (18) extending in the horizontal direction laterally next to the row of the first group (15) of first wire guide channels (16) in such a manner that the vertical extent of the two rows of the second group (17) of second wire guide channels corresponds to the vertical extent of the row of the first group (15) of first wire guide channels.

4. Distribution unit according to one or more of Claims 1 to 3, **characterized in that** rows of wire guide channels (18), positioned immediately above one another, of the second group (17) of second wire guide channels are separated from one another by a partition (19).

5. Distribution unit according to Claim 4, **characterized in that** the partition (19) has penetrations in order to transfer cable cores between the rows of wire guide channels (18) positioned above one another.

6. Distribution unit according to one or more of Claims 1 to 5, **characterized in that** the first wire guide channels (16) of the first group (15) and the second wire guide channels (18) of the second group (17) have an arc-shaped course, wire guide channels (16, 18) positioned next to one another within each group (15, 17) being separated from one another by arc-shaped channel walls (20, 21).

7. Distribution unit according to Claim 6, **characterized in that** at least one arc-shaped channel wall has a penetration in order to transfer cable cores between adjacently positioned wire guide channels of a group.

8. Distribution unit according to Claim 6 or 7, **characterized in that** in the area of the second group of second wire guide channels, at least one arc-shaped channel wall has a penetration in order to guide cable cores, starting from the second side, via two different channel openings positioned in the area of the second side to the front face in such a manner that the cable cores can be supplied to one and the same channel opening in the area of the front face independently of the channel openings selected in the area of the second side.

9. Distribution unit according to one or more of Claims 1 to 8, **characterized in that** the or each wire guide element (10) is divided asymmetrically in such a manner that the first group (15) of first wire guide channels (16) extends over a greater section of the front face (11) of the distribution unit than the second group (17) of second wire guide channels (18).

10. Distribution unit according to one or more of Claims 1 to 8, **characterized in that** the or each wire guide element (22) is divided symmetrically in such a manner that the first group (15) of first wire guide channels (16) extends over an equally large section of the front face (11) of the distribution unit as the second group (17) of second wire guide channels (18).

11. Distribution unit according to one or more of Claims 1 to 10**, characterized in that** it is constructed as a distribution block having a number of functional strips sandwiched above one another, at least one wire guide element being positioned between two adjacent functional strips.

12. Wire guide element for a distribution unit of a telecommunication system, comprising wire guide channels for cable cores, namely with a first group of first wire guide channels which extend from a first side to a front face, and with a second group of second wire guide channels which extend from a second side, opposite to the first side, to the front face, the first wire guide channels having a greater cross section than the second wire guide channels, **characterized in that** the second group (17) of second wire guide channels (18) extends in the same plane as the first group (15) of first wire guide channels (16), the first group (15) of first wire guide channels having a number of wire guide channels (16) positioned next to one another, and the second group (17) of second wire guide channels having a number of wire guide channels (18) positioned next to one another and above one another.

13. Wire guide element according to Claim 12, **characterized in that** the second wire guide channels (18) of the second group (17) extend laterally next to the first wire guide channels (16) of the first group (15), seen in the horizontal direction, the vertical extent of the second group (17) of second wire guide channels corresponding to the vertical extent of the first group (15) of first wire guide channels.

14. Wire guide element according to Claim 12 or 13, **characterized in that** the first group (15) of first wire guide channels has a single row of a number of adjacently positioned wire guide channels (16) extending horizontally, and that the second group (17) of second wire guide channels has two rows, extending horizontally and arranged vertically above one another, of a number of wire guide channels (18) positioned next to one another, the two rows of the second group (17) of second wire guide channels (18) extending in the horizontal direction laterally next to the row of the first group (15) of first wire guide channels (16) in such a manner that the vertical extent of the two rows of the second group (17) of second wire guide channels (18) corresponds to the vertical extent of the row of the first group (15) of first wire guide channels (16).

15. Wire guide element according to one or more of Claims 12 to 14, **characterized in that** rows of wire guide channels (18) of the second group (17) of second wire guide channels, positioned immediately above one another, are separated from one another by a partition (19).

16. Wire guide element according to Claim 15, **characterized in that** the partition (19) has penetrations in order to transfer cable cores between the rows of wire guide channels (18) positioned above one another.

17. Wire guide element according to one or more of Claims 12 to 16, **characterized in that** the first wire guide channels (16) of the first group (15) and the second wire guide channels (18) of the second group (17) have an arc-shaped course, wire guide channels (16, 18) positioned next to one another within each group (15, 17) being separated from one another by arc-shaped channel walls (20, 21).

18. Wire guide element according to Claim 17, **characterized in that** in the area of the second group of second wire guide channels, at least one arc-shaped channel wall has a penetration in order to guide cable cores, starting from the second side, via two different channel openings positioned in the area of the second side to the front face in such a manner that the cable cores can be supplied to one and the same channel opening in the area of the front face independently of the channel openings selected in the area of the second side.

19. Wire guide element according to one or more of Claims 12 to 18, **characterized in that** it is divided asymmetrically in such a manner that the first group (15) of first wire guide channels (16) extends over a greater section of the front face (11) than the second group (17) of second wire guide channels (18).

20. Wire guide element according to one or more of Claims 12 to 18, **characterized in that** it is divided symmetrically in such a manner that .the first group (15) of first wire guide channels (16) extends over an equally large section of the front face (11) of the distribution unit as the second group (17) of second wire guide channels (18).

## Revendications

1. Dispositif de distribution, notamment barrette de distribution ou bloc de distribution, d'une installation de télécommunication, comprenant au moins une barrette fonctionnelle et au moins un élément guide-fil, la ou chaque barrette fonctionnelle présentant, sur un côté avant du dispositif de distribution, des contacts pour le raccordement de brins de câble arrivant ou partant, et le ou chaque élément guide-fil présentant des canaux guide-fil pour les brins de câble, à savoir un premier groupe de premiers canaux guide-fil qui s'étendent depuis un premier côté jusqu'au côté avant du dispositif de distribution, et un deuxième groupe de deuxièmes canaux guide-fil qui s'étendent depuis un deuxième côté opposé au premier côté jusqu'au côté avant du dispositif de distribution, les premiers canaux guide-fil présentant une plus grande section transversale que les deuxièmes canaux guide-fil, **caractérisé en ce que** le deuxième groupe (17) de deuxièmes canaux guide-fil (18) s'étend dans le même plan que le premier groupe (15) de premiers canaux guide-fil (16),
le premier groupe (15) de premiers canaux guide-fil présentant plusieurs canaux guide-fil (16) positionnés les uns à côté des autres, et le deuxième groupe (17) de deuxièmes canaux guide-fil présentant plusieurs canaux guide-fil (18) positionnés les uns à côté des autres et les uns au-dessus des autres.

2. Dispositif de distribution selon la revendication 1, **caractérisé en ce que** les deuxièmes canaux guide-fil (18) du deuxième groupe (17) s'étendent, vu dans la direction horizontale, latéralement à côté des premiers canaux guide-fil (16) du premier groupe (15), l'étendue verticale du deuxième groupe (17) de deuxièmes canaux guide-fil correspondant à l'étendue verticale du premier groupe (15) de premiers canaux guide-fil.

3. Dispositif de distribution selon la revendication 1 ou 2, **caractérisé en ce que** le premier groupe (15) de premiers canaux guide-fil présente une rangée unique s'étendant horizontalement de plusieurs canaux guide-fil (16) positionnés les uns à côté des autres, et **en ce que** le deuxième groupe (17) de deuxièmes canaux guide-fil présente deux rangées s'étendant horizontalement et disposées verticalement l'une au-dessus de l'autre de plusieurs canaux guide-fil (18) positionnés les uns à côté des autres, les deux rangées du deuxième groupe (17) de deuxièmes canaux guide-fil (18) s'étendant dans la direction horizontale latéralement à côté de la rangée du premier groupe (15) de premiers canaux guide-fil (16) de telle sorte que l'étendue verticale des deux rangées du deuxième groupe (17) de deuxièmes canaux guide-fil corresponde à l'étendue verticale de la rangée du premier groupe (15) de premiers canaux guide-fil.

4. Dispositif de distribution selon l'une quelconque ou plusieurs des revendications 1 à 3, **caractérisé en ce que** des rangées de canaux guide-fil (18) du deuxième groupe (17) de deuxièmes canaux guide-fil, positionnées directement l'une au-dessus de l'autre, sont séparées l'une de l'autre par une paroi de séparation (19).

5. Dispositif de distribution selon la revendication 4, **caractérisé en ce que** la paroi de séparation (19) présente des orifices, afin de transférer des brins de câble entre les rangées positionnées les unes au-dessus des autres de canaux guide-fil (18).

6. Dispositif de distribution selon l'une quelconque ou plusieurs des revendications 1 à 5, **caractérisé en ce que** les premiers canaux guide-fil (16) du premier groupe (15) et les deuxièmes canaux guide-fil (18) du deuxième groupe (17) présentent une allure de forme courbe, des canaux guide-fil (16, 18) positionnés les uns à côté des autres à l'intérieur de chaque groupe (15, 17) étant séparés les uns des autres par des parois de canal (20, 21) s'étendant suivant une forme courbe.

7. Dispositif de distribution selon la revendication 6, **caractérisé en ce qu'**au moins une paroi de canal s'étendant suivant une forme courbe présente un orifice afin de transférer des brins de câble entre des canaux guide-fil d'un groupe positionnés les uns à côté des autres.

8. Dispositif de distribution selon la revendication 6 ou 7, **caractérisé en ce que** dans la région du deuxième groupe de deuxièmes canaux guide-fil, au moins une paroi de canal s'étendant suivant une forme courbe présente un orifice afin de guider à partir du deuxième côté, des brins de câble par le biais de deux ouvertures de canal différentes positionnées dans la région du deuxième côté, sur le côté avant, de telle sorte qu'indépendamment des ouvertures de canal choisies dans la région du deuxième côté, les brins de fil puissent être acheminés dans la région du côté avant à la même ouverture de canal unique.

9. Dispositif de distribution selon l'une quelconque ou plusieurs des revendications 1 à 8, **caractérisé en ce que** le ou chaque élément guide-fil (10) est divisé asymétriquement de telle sorte que le premier groupe (15) de premiers canaux guide-fil (16) s'étende sur une plus grande portion du côté avant (11) du dispositif de distribution que le deuxième groupe (17) de deuxièmes canaux guide-fil (18).

10. Dispositif de distribution selon l'une quelconque ou plusieurs des revendications 1 à 8, **caractérisé en ce que** le ou chaque élément guide-fil (22) est divisé symétriquement de telle sorte que le premier groupe (15) de premiers canaux guide-fil s'étende sur une portion de même taille du côté avant (11) du dispositif de distribution que le deuxième groupe (17) de deuxièmes canaux guide-fil (18).

11. Dispositif de distribution selon l'une quelconque ou plusieurs des revendications 1 à 10, **caractérisé en ce que** celui-ci est réalisé sous la forme d'un bloc de distribution avec plusieurs barrettes fonctionnelles disposées en sandwich les unes au-dessus des autres, au moins un élément guide-fil étant positionné entre deux barrettes fonctionnelles adjacentes.

12. Elément guide-fil pour un dispositif de distribution d'une installation de télécommunication, comprenant des canaux guide-fil pour des brins de câble, à savoir un premier groupe de premiers canaux guide-fil qui s'étendent depuis un premier côté jusqu'à un côté avant, et un deuxième groupe de deuxièmes canaux guide-fil qui s'étendent depuis un deuxième côté opposé au premier côté jusqu'au côté avant, les premiers canaux guide-fil présentant une plus grande section transversale que les deuxièmes canaux guide-fil, **caractérisé en ce que** le deuxième groupe (17) de deuxièmes canaux guide-fil (18) s'étend dans le même plan que le premier groupe (15) de premiers canaux guide-fil (16), le premier groupe (15) de premiers canaux guide-fil présentant plusieurs canaux guide-fil (16) positionnés les uns à côté des autres, et le deuxième groupe (17) de deuxièmes canaux guide-fil présentant plusieurs canaux guide-fil (18) positionnés les uns à côté des autres et les uns au-dessus des autres.

13. Elément guide-fil selon la revendication 12, **caractérisé en ce que** les deuxièmes canaux guide-fil (18) du deuxième groupe (17) s'étendent, vu dans la direction horizontale, latéralement à côté des premiers canaux guide-fil (16) du premier groupe (15), l'étendue verticale du deuxième groupe (17) de deuxièmes canaux guide-fil correspondant à l'étendue verticale du premier groupe (15) de premiers canaux guide-fil.

14. Elément guide-fil selon la revendication 12 ou 13, **caractérisé en ce que** le premier groupe (15) de premiers canaux guide-fil présente une rangée unique s'étendant horizontalement de plusieurs canaux guide-fil (16) positionnés les uns à côté des autres, et **en ce que** le deuxième groupe (17) de deuxièmes canaux guide-fil présente deux rangées s'étendant horizontalement et disposées verticalement l'une au-dessus de l'autre de plusieurs canaux guide-fil (18) positionnés les uns à côté des autres, les deux rangées du deuxième groupe (17) de deuxièmes canaux guide-fil (18) s'étendant dans la direction horizontale latéralement à côté de la rangée du premier groupe (15) de premiers canaux guide-fil (16) de telle sorte que l'étendue verticale des deux rangées du deuxième groupe (17) de deuxièmes canaux guide-fil (18) corresponde à l'étendue verticale de la rangée du premier groupe (15) de premiers canaux guide-fil (16).

15. Elément guide-fil selon l'une quelconque ou plusieurs des revendications 12 à 14, **caractérisé en ce que** des rangées de canaux guide-fil (18) du deuxième groupe (17) de deuxièmes canaux guide-fil, positionnées directement les unes au-dessus des autres, sont séparées les unes des autres par une paroi de séparation (19).

16. Elément guide-fil selon la revendication 15, **caractérisé en ce que** la paroi de séparation (19) présente des orifices, afin de transférer des brins de câble entre les rangées positionnées les unes au-dessus des autres de canaux guide-fil (18).

17. Elément guide-fil selon l'une quelconque ou plusieurs des revendications 12 à 16, **caractérisé en ce que** les premiers canaux guide-fil (16) du premier groupe (15) et les deuxièmes canaux guide-fil (18) du deuxième groupe (17) présentent une allure de forme courbe, des canaux guide-fil (16, 18) positionnés les uns à côté des autres à l'intérieur de chaque groupe (15, 17) étant séparés les uns des autres par des parois de canal (20, 21) s'étendant suivant une forme courbe.

18. Elément guide-fil selon la revendication 17, **caractérisé en ce que**, dans la région du deuxième groupe de deuxièmes canaux guide-fil, au moins une paroi de canal s'étendant suivant une forme courbe présente un orifice afin de guider à partir du deuxième côté, des brins de câble par le biais de deux ouvertures de canal différentes positionnées dans la région du deuxième côté, sur le côté avant, de telle sorte qu'indépendamment des ouvertures de canal choisies dans la région du deuxième côté, les brins de fil puissent être acheminé dans la région du côté avant à la même ouverture de canal unique.

19. Elément guide-fil selon l'une quelconque ou plusieurs des revendications 12 à 18, **caractérisé en ce que** celui-ci est divisé asymétriquement de telle sorte que le premier groupe (15) de premiers canaux guide-fil (16) s'étende sur une plus grande portion du côté avant (11) que le deuxième groupe (17) de deuxièmes canaux guide-fil (18).

20. Elément guide-fil selon l'une quelconque ou plusieurs des revendications 12 à 18, **caractérisé en ce que** celui-ci est divisé asymétriquement de telle sorte que le premier groupe (15) de premiers canaux guide-fil (16) s'étende sur une portion de même taille du côté avant (11) du dispositif de distribution que le deuxième groupe (17) de deuxièmes canaux guide-fil (18).
